# EUROPÄISCHE PATENTANMELDUNG

(11) **EP 1 193 222 A2**
(43) Veröffentlichungstag der Anmeldung: **03.04.2002**
(21) Anmeldenummer: 01118212.8
(22) Anmeldetag: 28.07.2001
(51) Int. Cl.: C02F 11/12, B01D 33/06, B01D 33/46

(54) **Vorrichtung zum Eindicken von Schlämmen**

(30) Priorität: 28.09.2000 DE 10049250
(71) Anmelder: Passavant-Roediger Umwelttechnik GmbH, 65322 Aarbergen (DE)
(72) Erfinder: Seel, Karl, 65326 Aarbergen (DE); Schmitt, Wälti, 65307 Bad Schwalbach (DE)
(74) Vertreter: KEIL & SCHAAFHAUSEN

(57) **Zusammenfassung**

Eine Vorrichtung (1) zum Eindicken von Schlämmen aus flüssigen Medien weist eine Spaltsiebtrommel (3) auf, die um eine horizontale Achse drehbar gelagert und über einen Motor (9) antreibbar ist, eine Zuführung (10) für einzudickende Medien mit denen die Außenseite der Spaltsiebtrommel (3) beaufschlagt wird, einen mit dem Innenraum (14) der Spaltsiebtrommel (3) verbundenen Filtratablauf (15) und einen an der Außenseite der Spaltsiebtrommel (3) anliegenden Abstreifer (13) auf. Die Filterleistung soll dadurch verbessert werden, dass die Spaltsiebtrommel (3) in einem geschlossenem Gehäuse (2) aufgenommen ist, wobei die Spaltsiebtrommel (3) in die in dem Gehäuse (2) unter Überdruck stehenden einzudickenden Medien eingetaucht rotiert.

## Beschreibung

Die Erfindung betrifft eine Vorrichtung zum Eindicken von Schlämmen aus flüssigen Medien mit einer Spaltsiebtrommel, die um eine horizontale Achse drehbar gelagert und über einen Motor antreibbar ist, einer Zuführung für einzudickende Medien, mit denen die Außenseite der Spaltsiebtrommel beaufschlagt wird, einem mit dem Innenraum der Spaltsiebtrommel verbundenen Filtratablauf und einem an der Außenseite der Spaltsiebtrommel anliegenden Abstreifer.

Derartige Vorrichtungen werden zur Dehydrierung von unterschiedlichen Schlämmen aus kommunalen oder industriellen Kläranlagen eingesetzt. Dabei kann es sich um Frischschlämme, stabilisierte Belebtschlämme, Überschussschlämme aus biologischen Reinigungsstufen, Faulschlämme zur Voreindickung vor der endgültigen Entwässerung oder voreingedickte Schlämme aus Festbettreaktoren handeln. Weiterhin werden derartige Vorrichtungen zur Aufkonzentration von Suspensionen und Absiebung von Stoffen, die beispielsweise geruchsbelastet sind, verwendet.

Zur Trennung von Feststoffen aus kommunalen oder industriellen Abwässern ist ein Trommelsieb mit einer Spaltweite zwischen 0,25 mm und 3 mm bekannt, das von oben mit Abwasser angeströmt wird. Die sich auf dem Trommelsieb ablagernden Feststoffe werden über einen Abstreifer, der gegen die Außenfläche des Trommelsiebes anliegt, entfernt. Gleichzeitig durchströmt das Filtrat das Trommelsieb von oben nach unten und entfernt dabei Feststoffpartikel, die sich zwischen den Siebdrähten absetzen. Diese Partikel werden mit dem Filtrat abgeführt. Das Trommelsieb eignet sich daher nur zu einer Reinigung des Abwassers von größeren Feststoffen.

Weiter ist aus der EP 0 943 366 A1 eine Drehtrommel der eingangs genannten Art zur Entwässerung von Schlämmen, die Betonit enthalten, bekannt. Dabei ist der Filtratablauf, der mit dem Innenraum der Spaltsiebtrommel verbunden ist, an eine Vakuumpumpe angeschlossen, die Filtrat aus dem Innenraum der Spaltsiebtrommel absaugt. Die hierfür erforderliche Pumpenleistung der Vakuumpumpe ist vergleichsweise hoch. Zudem wird durch die Vakuumpumpe nicht nur Filtrat in die Drehtrommel eingesaugt, sondern zusätzlich auch Umgebungsluft. Dadurch sinkt die Filterleistung der Drehtrommel. Weiterhin können bei dieser Anordnung Gase aus den Schlämmen ungehindert in die Umgebung entweichen, was gerade bei stark geruchsbelasteten Schlämmen als unangenehm empfunden wird.

Aufgabe der Erfindung ist es daher, eine Vorrichtung der eingangs genannten Art zu schaffen, die eine verbesserte Filterleistung aufweist und bei der Geruchsbelästigungen weitgehend vermieden werden.

Diese Aufgabe wird im Wesentlichen dadurch gelöst, dass die Spaltsiebtrommel in einem geschlossenem Gehäuse aufgenommen ist, in das die Zuführung für einzudickende Medien mündet und aus dem der Filtratablauf und ein an dem Abstreifer ausgeordneter Schlammaustrag herausführen, und dass die Spaltsiebtrommel in die in dem Gehäuse unter Überdruck stehenden einzudickenden Medien eingetaucht rotiert. Dieser erfindungsgemäßen Lehre liegt die Überlegung zu Grunde, dass eine besonders wirkungsvolle Entwässerung von Schlamm erreicht wird, wenn die Spaltsiebtrommel durch unter Überdruck stehende einzudickende Medien von außen angeströmt wird. Das Wasser durchströmt dann die Spaltsiebtrommel von außen nach innen, wobei die Außenseite der Spaltsiebtrommel mit Schlamm- und Feststoffen belegt wird. Dies führt zu einem weiteren Druckaufbau innerhalb des Gehäuses, so dass das Filtrat in den Innenraum der Spaltsiebtrommel gepresst wird. Gleichzeitig legt sich der Schlamm fest an die Spaltsiebtrommel an und wird durch deren Umdrehung auf ihrer Außenseite mitgeführt. Der eingedickte Schlamm wird durch den Abstreifer entfernt und über den Schlammaustrag einem Schlammbunker zugeführt. Die erfindungsgemäße Vorrichtung verfügt dabei über eine besonders hohe Filterleistung, wobei die Pumpenleistung zur Zuführung der einzudickenden Medien unter Überdruck gering gehalten werden kann. Gleichzeitig wird durch das allseits geschlossene Gehäuse vermieden, dass eine Geruchsbelästigung der Umgebung auftritt.

Vorzugsweise ist der Abstand zwischen dem Gehäuse und der Außenseite der Spaltsiebtrommel über ein in dem Gehäuse angeordnetes verstellbares Leitblech veränderbar. Auf diese Weise kann die Schlammeindickung reguliert werden, so dass ein optimaler Eindickungsgrad erzielt wird. Das Leitblech kann dabei auch während des Betriebs von der Außenseite des Gehäuses her eingestellt werden. Dadurch ist es möglich, die Filterleistung der erfindungsgemäßen Vorrichtung ohne Stillstandszeiten an unterschiedliche einzudickende Medien anzupassen.

Für die üblicherweise in kommunalen und industriellen Kläranlagen anfallenden Schlämme hat es sich als besonders vorteilhaft erwiesen, dass die Spaltweite der Spaltsiebtrommel zwischen 0,1 mm und 1,5 mm beträgt.

Zusätzlich zu der Entfernung des eingedickten Schlamms durch den Abstreifer ist eine besonders wirkungsvolle Reinigung der Spalte der Spaltsiebtrommel durch das Vorsehen eines mit Düsen versehenden Abspritzrohres in der Spaltsiebtrommel möglich. Die Siebfläche kann dadurch zur Optimierung der Filterleistung von Schlammpartikeln gereinigt werden, die sich in den Siebspalten festgesetzt haben.

Der Abstreifer besteht vorzugsweise aus rostfreiem Spezialstahl, wodurch eine hohe Lebensdauer und ein geringer Verschleiß des Abstreifers und Siebzylinders erzielt wird. Insbesondere beim Einsatz aggressiver einzudickender Medien ist es auch möglich, den Abstreifer aus Polytetrafluorethylen (PTFE) auszubilden oder damit zu beschichten.

Wartungs- und Instandhaltungsarbeiten an der Vorrichtung werden erfindungsgemäß dadurch erleichtert, dass der Motor zum Antrieb der Spaltsiebtrommel sowie die zugehörige Steuereinheit außerhalb des Gehäuses angeordnet sind. Wartungsintensive Komponenten der Vorrichtung sind damit leicht zugänglich, wodurch die Stillstandszeiten für Wartung und Instandhaltung minimiert werden.

Nach einer bevorzugten Ausführungsform der Erfindung ist in dem Gehäuse wenigstens ein Sensor zur Messung der Füllhöhe des einzudickenden Mediums angeordnet. Damit kann zur Optimierung der Filterleistung die Rotationsgeschwindigkeit der Spaltsiebtrommel in Abhängigkeit von der Füllhöhe des einzudickenden Mediums in dem Gehäuse gesteuert werden.

In Weiterbildung dieses Erfindungsgedankens wird an der in das Gehäuse mündenden Zuführung ein Ventil zur Regelung der Durchflussmenge in Abhängigkeit von der Füllhöhe des einzudickenden Mediums vorgesehen. Bei Erreichen einer vorbestimmten Füllhöhe des einzudickenden Mediums wird die Zuführung durch das Ventil gedrosselt und bei übersteigen einer bestimmten Füllhöhe vollständig geschlossen. Auf diese Weise lässt sich eine kontinuierliche Filterleistung erzielen und Fehlfunktionen der Vorrichtung können vermieden werden.

Die Erfindung wird nachfolgend anhand eines Ausführungsbeispiels und der Zeichnung näher erläutert.

Es zeigen:
- Fig. 1: in einer teilweise geschnittenen Darstellung eine Seitenansicht auf eine erfindungsgemäße Vorrichtung und
- Fig. 2: eine Querschnittsansicht durch die Vorrichtung gemäß Fig. 1 senkrecht zur Rotationsachse der Spaltsiebtrommel.

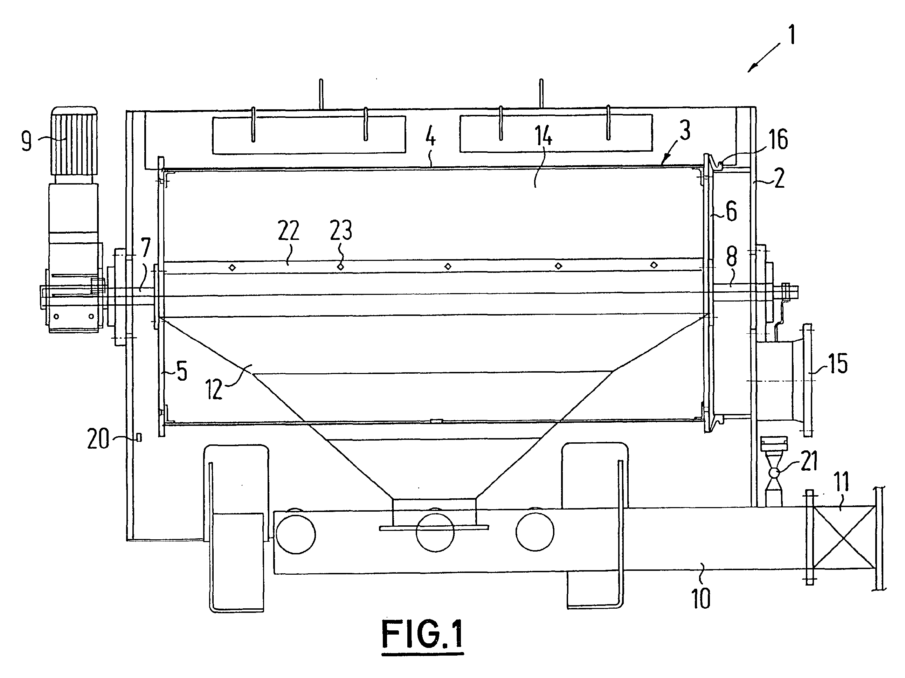

In den beiden Figuren ist eine Vorrichtung 1 zum Eindicken von Schlämmen dargestellt, die eine in einem Gehäuse 2 aufgenommene Spaltsiebtrommel 3 aufweist. Die Spaltsiebtrommel 3 besteht aus einer zylinderförmigen Siebfläche 4, einer geschlossenen Kopfscheibe 5 und einer mit Öffnungen versehenden Kopfscheibe 6. Die Spaltsiebtrommel 3 ist über an den Kopfscheiben 5 und 6 befestigte Lagerzapfen 7 bzw. 8 frei drehbar in dem Gehäuse 2 gelagert. Der in Fig. 1 linke Lagerzapfen 7 ist mit einem Motor 9 verbunden, über den die Spaltsiebtrommel 3 in dem Gehäuse 2, wie durch den Pfeil angedeutet, rotiert werden kann.

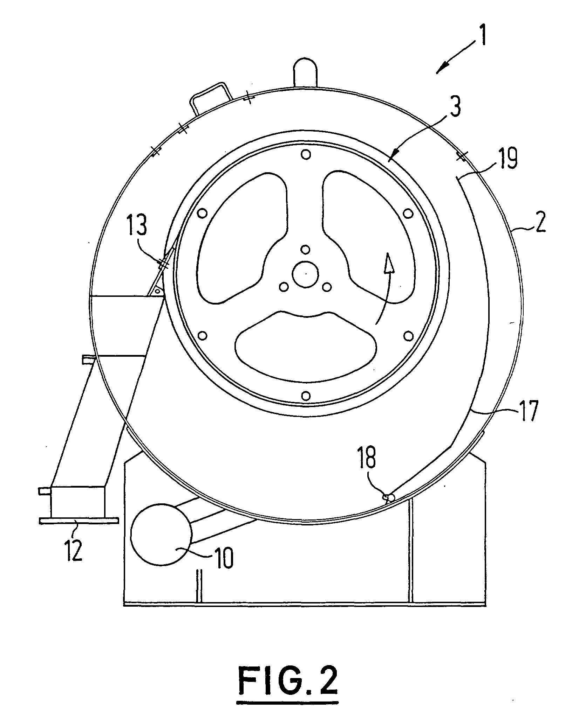

In das Gehäuse 2 mündet eine Zuführung 10, über die einzudickende Medien unter Druck in das Gehäuse 2 geleitet werden. In der Zuführung 10 ist ein Ventil 11 angeordnet, über das die Durchflussmenge in der Zuführung 10 regelbar ist. Weiter führt aus dem Gehäuse 2 ein Schlammaustrag 12 heraus. Der Schlammaustrag 12 ist dabei unterhalb eines Abstreifers 13 positioniert, der, wie in Fig. 2 dargestellt, an der Außenseite der Spaltsiebtrommel 3 anliegt.

Der Innenraum 14 der Spaltsiebtrommel 3 ist über die Öffnungen in der Kopfscheibe 6 mit einem Filtratablauf 15 verbunden. Mittels einer Dichtung 16 wird dazu der in den Filtratablauf 15 mündende Bereich des Gehäuseinnenraums gegenüber dem restlichem Gehäuseinnenraum abgedichtet.

Wie in Fig. 2 dargestellt, ist in dem Gehäuse 2 zwischen der Gehäusewand und der Spaltsiebtrommel 3 ein Leitblech 17 angeordnet, das mit einem ersten Ende über eine Befestigung 18 fest mit dem Gehäuse 2 verbunden ist. Das freie Ende 19 des Leitblechs 17 ist über eine nicht dargestellte Verstelleinrichtung von der Gehäuseaußenseite her so einstellbar, dass der Abstand zwischen dem Gehäuse 2 und der Spaltsiebtrommel 3 veränderbar ist.

In dem Innenraum des Gehäuses 2 ist unterhalb der Rotationsachse der Spaltsiebtrommel 3 ein Sensor 20 angeordnet. Der Sensor 20 ist dabei bspw. ein Ultraschallsensor, über den die Füllhöhe des einzudickenden Mediums in dem Gehäuse 2 gemessen wird. Der Sensor 20 ist mit einer in der Figur nicht dargestellten Steuereinheit verbunden, die die Drehzahl des Motors 9 zum Antrieb der Spaltsiebtrommel 3 steuert. Gleichzeitig kann durch die Steuereinrichtung 20 auch das Ventil 11 zur Regelung der Durchflussmenge der einzudickenden Medien in der Zuführung 10 angesteuert werden.

Zur Reinigung der Zuführung 10 ist eine Spülleitung 21 vorgesehen. Weiter ist im Innenraum 14 der Spaltsiebtrommel 3 ein Abspritzrohr 22 angeordnet, das eine Anzahl von Düsen 23 aufweist, die auf die Siebfläche 4 der Spaltsiebtrommel 3 gerichtet sind. Das Abspritzrohr 22 wird über eine nicht dargestellte Pumpe mit einer Reinigungsflüssigkeit, wie bspw. Betriebwasser, versorgt.

Die Betriebsweise der Vorrichtung 1 zum Eindicken von Schlämmen wird nachfolgend erläutert: Über die Zuführung 10 wird ein einzudickendes Medium bis zu einem Füllpegel in das Gehäuse 2 geleitet, so dass ein Teil der Spaltsiebtrommel 3 in das einzudickende Medium eingetaucht ist. Die Spaltsiebtrommel 3 wird über den Motor 9 angetrieben und dreht sich in dem Gehäuse 2 in der durch den Pfeil in Fig. 2 angedeuteten Richtung. Durch die Siebfläche 4 der Spaltsiebtrommel 3 dringt durch den Überdruck des einzudickenden Mediums in dem Gehäuse Filtratflüssigkeit in den Innraum 14 der Spaltsiebtrommel 3 ein.

Gleichzeitig lagert sich Schlamm an der äußeren Siebfläche 4 der Spaltsiebtrommel 3 an. Die Eindickung des Schlammes lässt sich durch die Einstellung des Leitblechs 17, das den Abstand zwischen dem Gehäuse 2 und der Spaltsiebtrommel 3 begrenzt, variieren.

Der auf der Siebfläche 4 der Spaltsiebtrommel 3 abgelagerte Schlamm wird aufgrund der Drehung der Spaltsiebtrommel 3 von dem Abstreifer 13, der an der Siebfläche 4 anliegt, abgestreift. Über den trichterförmigen Schlammaustrag 12 wird der Schlamm mittels einer Pumpe oder eines Schiebers einem Schlammbunker zugeführt. Gleichzeitig wird die Siebfläche 4 der Spaltsiebtrommel 3 von innen mittels der Düsen 23 des Abspritzrohres 22 abgespritzt. In der Siebfläche 4 festgesetzter Schlamm wird auf diese Weise entfernt. Die Düsen 23 des Abspritzrohres 22 können dabei kontinuierlich oder in Intervallen arbeiten. Der Abspitzdruck kann zwischen 4 bis 6 bar liegen; kurzzeitig kann die Siebfläche auch mit einem Druck von 9 bis 10 bar abgespritzt werden. Das Filtrat, das sich im Innenraum 14 der Spaltsiebtrommel 3 angesammelt hat, wird dann über den mit dem Innenraum 14 verbundenen Filtratablauf 15 zusammen mit dem Abspritzwasser abgeleitet.

Die Füllhöhe des einzudickenden Mediums in dem Gehäuse 2 wird über den Sensor 20 gemessen. Bei Erreichen einer ersten Füllhöhe wird der Motor 9 über die Steuereinheit eingeschaltet, so dass die Spaltsiebtrommel 3 in dem Gehäuse 2 rotiert. In Abhängigkeit von der Füllhöhe des einzudickenden Mediums in dem Gehäuse 2 kann die Rotationsgeschwindigkeit der Spaltsiebtrommel 3 variiert werden. Gleichzeitig wird beim Erreichen einer kritischen Füllhöhe in dem Gehäuse 2 die Durchflussmenge von einzudickendem Medium in der Zuführung 10 durch das Ventil 11 reduziert. Bei einer maximalen Füllhöhe kann die Zuführung 10 durch das Ventil 11 vollständig geschlossen werden, bis der Pegel des einzudickenden Mediums in dem Gehäuse 2 unter den kritischen Punkt abgesunken ist.

Der Überdruck des einzudickenden Mediums in dem Gehäuse 2 kann entweder durch eine Pumpe oder im freien Gefälle durch Schwerkraft erreicht werden. Dabei wurde festgestellt, dass schon mit einem Überdruck von unter 0,1 bar zufriedenenstellende Filterleistungen erzielt werden können. Selbstverständlich kann in Abhängigkeit vom einzudickenden Medium auch ein Druck von deutlich über 0,1 bar zum Erzielen hoher Filterleistungen notwendig sein.

### Bezugszeichenliste:

- 1: Vorrichtung zum Eindicken von Schlämmen
- 2: Gehäuse
- 3: Spaltsiebtrommel
- 4: Siebfläche
- 5: Kopfscheibe
- 6: Kopfscheibe
- 7: Lagerzapfen
- 8: Lagerzapfen
- 9: Motor
- 10: Zuführung
- 11: Ventil
- 12: Schlammaustrag
- 13: Abstreifer
- 14: Innenraum der Spaltsiebtrommel
- 15: Filtratablauf
- 16: Dichtung
- 17: Leitblech
- 18: Befestigung
- 19: freies Ende des Leitbleches
- 20: Sensor
- 21: Spülleitung
- 22: Abspritzrohr
- 23: Düsen

## Patentansprüche

1. Vorrichtung zum Eindicken von Schlämmen aus flüssigen Medien mit
einer Spaltsiebtrommel (3), die um eine horizontale Achse drehbar gelagert und über einen Motor (9) antreibbar ist,
einer Zuführung (10) für einzudickende Medien, mit denen die Außenseite der Spaltsiebtrommel (3) beaufschlagt wird,
einem mit dem Innenraum (14) der Spaltsiebtrommel (3) verbundenen Filtratablauf (15) und
einem an der Außenseite der Spaltsiebtrommel (3) anliegenden Abstreifer (13),
**dadurch gekennzeichnet, dass** die Spaltsiebtrommel (3) in einem geschlossenen Gehäuse (2) aufgenommen ist, in das die Zuführung (10) für einzudickende Medien mündet und aus dem der Filtratablauf (15) und ein an dem Abstreifer (13) angeordneter Schlammaustrag (12) herausführen, und dass die Spaltsiebtrommel (3) in die in dem Gehäuse (2) unter Überdruck stehenden einzudickenden Medien eingetaucht rotiert.

2. Vorrichtung nach Anspruch 1, **dadurch gekennzeichnet, dass** in dem Gehäuse (2) ein verstellbares Leitblech (17) angeordnet ist, durch das der Abstand zwischen dem Gehäuse (2) und der Außenseite der Spaltsiebtrommel (3) veränderbar ist.

3. Vorrichtung nach einem der Ansprüche 1 oder 2, **dadurch gekennzeichnet, dass** die Spaltweite der Spaltsiebtrommel (3) zwischen 0,1 mm und 1,5 mm beträgt.

4. Vorrichtung nach einem der Ansprüche 1 bis 3, **dadurch gekennzeichnet, dass** in der Spaltsiebtrommel (3) ein mit Düsen (23) versehenes Abspritzrohr (22) angeordnet ist.

5. Vorrichtung nach einem der Ansprüche 1 bis 4, **dadurch gekennzeichnet, dass** der Abstreifer (13) aus rostfreiem Spezialstahl besteht.

6. Vorrichtung nach einem der Ansprüche 1 bis 4, **dadurch gekennzeichnet, dass** der Abstreifer (13) wenigstens teilweise aus Polytetrafluorethylen (PTFE) besteht.

7. Vorrichtung nach einem der vorhergehenden Ansprüche, **dadurch gekennzeichnet, dass** der die Spaltsiebtrommel (3) antreibende Motor (9) und dessen Steuereinheit außerhalb des Gehäuses (2) vorgesehen ist.

8. Vorrichtung nach einem der vorhergehenden Ansprüche, **dadurch gekennzeichnet, dass** in dem Gehäuse (2) wenigstens ein Sensor (20) zur Messung der Füllhöhe des einzudickenden Mediums angeordnet ist.

9. Vorrichtung nach Anspruch 8, **dadurch gekennzeichnet, dass** an der in das Gehäuse (2) mündenden Zuführung (10) ein Ventil (11) zur Regelung der Durchflussmenge in Abhängigkeit von der Füllhöhe des einzudickenden Mediums vorgesehen ist.
